Europäisches Patentamt

European Patent Office

Office européen des brevets

(19)

(11) Numéro de publication: **0 326 485**
**A1**

## (12) DEMANDE DE BREVET EUROPEEN

(21) Numéro de dépôt: **89400209.6**

(22) Date de dépôt: **25.01.89**

(51) Int. Cl.⁴: **A 22 C 17/10**

(30) Priorité: **29.01.88 FR 8801080**

(43) Date de publication de la demande:
**02.08.89 Bulletin 89/31**

(84) Etats contractants désignés:
**AT BE CH DE ES GB GR IT LI LU NL SE**

(71) Demandeur: **Predault, Paul**
**Le Clos Chauvard 84, rue de Paris**
**F-95500 Gonesse (FR)**

(72) Inventeur: **Poiret, Jean-Louis**
**9 rue du Connetable de Saint Pol Maysel**
**F-60660 Cires les Mello (FR)**

(74) Mandataire: **Berger, Helmut et al**
**Cabinet Z. WEINSTEIN 20, avenue de Friedland**
**F-75008 Paris (FR)**

(54) **Procédé de marquage d'un produit alimentaire tel qu'un jambon et produit ainsi obtenu.**

(57) L'invention concerne un procédé de marquage d'un produit alimentaire, notamment d'un jambon, le cas échéant entouré au moins partiellement de sa couenne et emballé sous vide.

Ce procédé est caractérisé en ce que l'on pratique, avant l'emballage sous vide du produit, au moins une encoche (2) continue dans la direction sensiblement perpendiculairement à la direction de découpe de tranches, à partir de la surface extérieure jusqu'à une profondeur prédéterminée du produit, remplit au moins partiellement l'encoche (2) d'un moyen de marquage (3) et effectue ensuite l'opération de l'emballage sous vide, le moyen de marquage (3) étant adapté pour rester incrusté dans la partie d'encoche (2) des tranches découpées de façon à obtenir un marquage de chaque tranche.

L'invention est utilisable pour des jambons naturels.

FIG 1

EP 0 326 485 A1

**Description**

**Procédé de marquage d'un produit alimentaire tel qu'un jambon et produit ainsi obtenu.**

L'invention concerne un procédé de marquage d'un produit alimentaire, notamment d'un jambon, le cas échéant entouré au moins partiellement de sa couenne et emballé sous vide, et un produit obtenu selon ce procédé.

Il est connu pour des jambons cuits obtenus artificiellement selon un processus de moulage de conférer au jambon une forme distinctive lors du moulage avant l'opération de cuisson. A cette fin, on prévoit à l'intérieur du moule délimitant par exemple un espace de forme générale parallélépipédique une nervure longitudinale qui imprime au jambon une encoche de forme complémentaire s'étendant sur toute la longueur de celui-ci. Ainsi chaque tranche découpée du jambon fini présente à sa périphérie une encoche qui pourrait être considérée comme signe indicateur de son origine. Or, ce procédé de marquage connu n'est utilisable que pour des produits dont la fabrication implique une opération de moulage. De plus, une simple encoche périphérique ne constitue pas un caractère d'identification sûr, dans la mesure où elle est facilement reproductible à toute étape de la fabrication du jambon, postérieure au moulage.

Ainsi le marquage de produits comme des jambons naturels se limitait jusqu'à présent essentiellement aux produits entiers, c'est-à-dire à la disposition sur le produit d'un symbole d'identification de nature à le distinguer des produits par exemple concurrents.

La présente invention a pour but de proposer un procédé pour assurer un marquage à la tranche, qui est infalsifiable et utilisable également pour des produits naturels, notamment des jambons naturels, c'est-à-dire obtenus sans moulage.

Pour atteindre ce but, le procédé selon l'invention est caractérisé en ce que l'on pratique, avant l'emballage sous vide du produit, une encoche continue dans la direction sensiblement perpendiculairement à la direction de découpe des tranches, à partir de la surface extérieure jusqu'à une profondeur prédéterminée du produit, remplit au moins partiellement l'encoche d'un moyen de marquage et effectue ensuite l'opération d'emballage sous vide, le moyen de marquage étant adapté pour rester incrusté dans la partie d'encoche des tranches découpées de façon à obtenir un marquage de chaque tranche.

Selon une caractéristique avantageuse de l'invention, pour un jambon cuit entouré au moins partiellement de sa couenne, on pratique l'encoche dans cette dernière jusqu'à une profondeur prédéterminée.

Selon une caractéristique avantageuse, le moyen de marquage est formé par un élément en forme d'une nouille en une matière appropriée telle qu'une gelée, une mousseline ou un pain azimé, qui est susceptible d'adhérer aux parois délimitant l'encoche.

Selon une autre caractéristique avantageuse de l'invention, le moyen de marquage est formé par un élément en forme d'un fil ou ruban, tel qu'un fil d'or ou une tresse de fil d'or.

Le produit naturel tel qu'un jambon naturel, le cas échéant cuit et entouré au moins partiellement de sa couenne, obtenu par le procédé susmentionné, est caractérisé en ce qu'il comporte dans sa partie extérieure, telle que sa couenne, au moins une encoche continue s'étendant dans le sens du produit de façon que chaque tranche découpée de celui-ci présente une partie de cette encoche, à partir de sa surface extérieure jusqu'à une profondeur prédéterminée, et que l'encoche est remplie d'un moyen de marquage susceptible de rester incrusté dans la partie d'encoche de chaque tranche.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention, et dans lesquels :

La figure 1 est une vue en coupe schématique et en perspective d'un jambon pourvu d'un marquage selon la présente invention ; et

La figure 2 est une vue en perspective à plus grande échelle du détail indiqué en II à la figure 1.

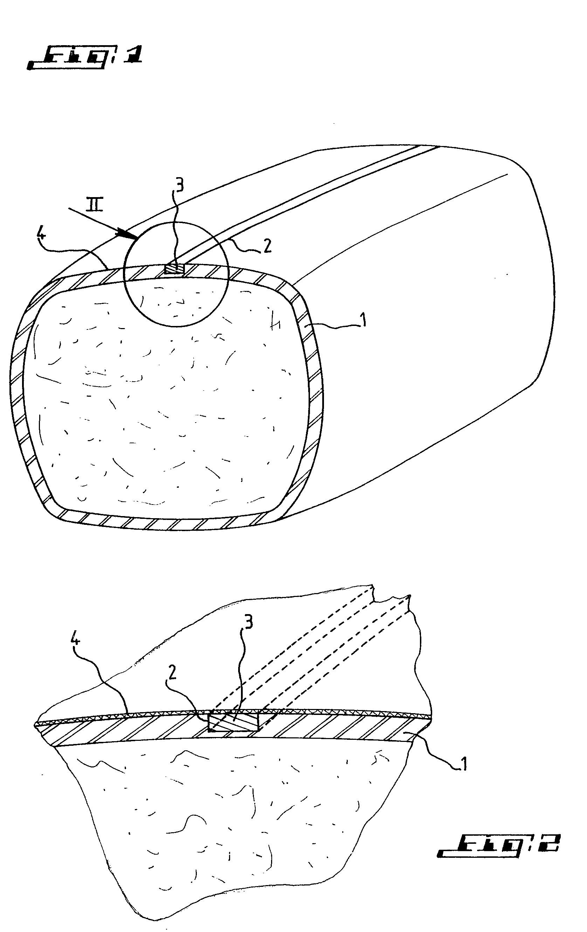

L'invention sera décrite, à titre d'exemple, dans son application à un jambon naturel. Comme il ressort des figures, ce jambon est entouré au moins en grande partie de sa couenne indiquée en 1. Ce jambon est formé par une cuisse de porc, c'est-à-dire de viande fraîche, qui a été désossée, mis en forme en une poche plastique sous vide et cuit dans cette poche.

Après cette opération de cuisson, on ouvre la poche et découpe dans la couenne 1 une encoche 2 qui s'étend de façon continue dans la direction longitudinale du jambon, c'est-à-dire dans un sens perpendiculaire à la direction de découpe des tranches, jusqu'à une profondeur prédéterminée. Cette encoche peut présenter toute forme appropriée. Ensuite l'encoche est remplie au moins partiellement d'un moyen de marquage 3. Ce moyen peut être formé par une matière en forme d'une nouille, telle que de la gelée, d'une mousseline ou d'un pain azimé ou analogue. On pourrait également utiliser à cette fin un fil d'or, une tresse de fil d'or ou un boyau tressé. Ensuite le jambon ainsi préparé est soumis à l'opération de l'emballage sous vide. Ainsi le moyen de marquage 3 est emprisoné dans l'encoche par le film transparent d'emballage 4. L'encoche peut présenter, par exemple, une largeur de l'ordre de 1 cm et une profondeur de 2 mm.

Il est à noter que tout moyen ou matière de remplissage peut être utilisé qui adhère aux parois de l'encoche 2, après l'emballage sous vide, dans la partie d'encoche d'une tranche découpée. Lorsque le moyen de marquage est une nouille, une gelée, ou une mousseline, cette matière reste accrochée dans l'encoche par un effet de collage. On constate que dans ce cas, lorsque l'encoche a été remplie complètement, elle conserve sa forme même pendant l'opération de l'emballage. Lorsque le moyen de marquage est formé par un fil ou une tresse, l'encoche se referme partiellement autour de ce moyen, ce qui assure son incrustation et sa retenue même après une découpe en tranches fines.

Le moyen de marquage doit être visible à la périphérie de chaque tranche dans le plan de celle-ci et garder un aspect valorisant. A cette fin on utilisera avantageusement une matière de couleur appropriée. Le moyen de marquage doit se prêter au découpe en tranche et doit être compatible avec les règles ou exigences alimentaires.

Bien entendu de nombreuses modifications et variantes peuvent être apportées à l'example d'utilisation qui vient d'être décrit en se référant aux figures. Ainsi tout type d'encoche, quant à sa section transversale et sa profondeur peut être choisi qui ne détruit pas aux yeux du consommateur l'image de produit naturel et ne provoque pas chez celui-ci l'association du marquage à l'intégration d'un corps étranger dans le produit. Il va de soi qu'en choisissant de manière appropriée la matière de marquage, l'invention est également applicable à des produits alimentaires autres que des jambons entourés d'une couenne ou de jambons cuits.

## Revendications

1. Procédé de marquage d'un produit alimentaire, notamment d'un jambon, le cas échéant entouré au moins partiellement de sa couenne et emballé sous vide, caractérisé en ce que l'on pratique, avant l'emballage sous vide du produit, au moins une encoche (2) continue dans la direction sensiblement perpendiculairement à la direction de découpe de tranches, à partir de la surface extérieure jusqu'à une profondeur prédéterminée du produit, remplit au moins partiellement l'encoche (2) d'un moyen de marquage (3) et effectue ensuite l'opération de l'emballage sous vide, le moyen de marquage (3) étant adapté pour rester incrusté dans la partie d'encoche (2) des tranches découpées de façon à obtenir un marquage de chaque tranche.

2. Procédé selon la revendication 1, pour un jambon cuit entouré au moins partiellement de sa couenne, caractérisé en ce que l'on pratique l'encoche (2) dans la couenne (1) jusqu'à une profondeur prédéterminée.

3. Produit naturel tel qu'un jambon naturel, le cas échéant cuit et entouré au moins partiellement de sa couenne, obtenu par le procédé selon l'une des revendications 1 ou 2, caractérisé en ce qu'il comporte dans sa partie périphérique telle que sa couenne (1), au moins une encoche (2) continue s'étendant dans le produit de façon que chaque tranche découpée de celui-ci présente une partie de cette encoche (2), à partir de sa surface extérieure jusqu'à une profondeur prédéterminée, et que l'encoche (2) est remplie d'un moyen de marquage (3) susceptible de rester incrusté dans la partie d'encoche de chaque tranche.

4. Produit selon la revendication 3, caractérisé en ce que le moyen de marquage (3) est formé par un élément en forme d'une nouille en une matière appropriée telle qu'une gelée, une mousseline ou un pain azimé, qui est susceptible d'adhérer aux parois délimitant l'encoche (2).

5. Produit selon la revendication 3, caractérisé en ce que le moyen de marquage (3) est formé par un élément en forme d'un fil ou ruban, tel qu'un fil d'or, une tresse de fil d'or ou un boyau tressé.

Fig. 1

Fig. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A- 657 598 (PARET)<br>* En entier *<br>--- | 1,4 | A 22 C  17/10 |
| A | NL-A-7 001 241 (KASTELEIN)<br>--- | | |
| A | US-A-2 615 196 (OHANIAN)<br>--- | | |
| A | FR-A-  800 923 (THE NAME CORP.)<br>----- | | |

**DOMAINES TECHNIQUES RECHERCHES (Int. Cl.4)**

A 22 C

Le présent rapport a été établi pour toutes les revendications

| Lieu de la recherche | Date d'achèvement de la recherche | Examinateur |
|---|---|---|
| LA HAYE | 10-04-1989 | DE LAMEILLIEURE D. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   . date de dépôt ou après cette date
D : cité dans la demande
L : cité pour d'autres raisons
...........................................................................................
& : membre de la même famille, document correspondant

EPO FORM 1503 03.82 (P0402)